# EUROPÄISCHE PATENTSCHRIFT

(11) **EP 3 566 925 B1**
(45) Veröffentlichungstag und Bekanntmachung des Hinweises auf die Patenterteilung: **15.12.2021**
(21) Anmeldenummer: 19161847.9
(22) Anmeldetag: 11.03.2019
(51) Int. Cl.: B60W 50/14, G09B 9/042, G09B 9/052

(54) **(TEIL-) AUTONOMES KRAFTFAHRZEUG UND VERFAHREN ZUM BETREIBEN DESSELBEN**
(PARTIALLY) AUTONOMOUS MOTOR VEHICLE AND METHOD FOR OPERATING THE SAME
VÉHICULE AUTOMOBILE (PARTIELLEMENT) AUTONOME ET PROCÉDÉ DE FONCTIONNEMENT D'UN TEL VÉHICULE AUTOMOBILE

(30) Priorität: 08.05.2018 DE 102018111016
(43) Veröffentlichungstag der Anmeldung: 13.11.2019
(73) Patentinhaber: MAN Truck & Bus SE, 80995 München (DE)
(72) Erfinder: HILDEBRANDT, Arne-Christoph, 81543 München (DE); BÄNZIGER, Timo, 80798 München (DE); SCHWERTBERGER, Walter, 82278 Althegnenberg (DE)
(74) Vertreter: v. Bezold & Partner Patentanwälte - PartG mbB

(56) Entgegenhaltungen:
- WO-A1-2018/224407
- DE-A1-102009 040 677
- DE-A1-102014 208 352
- DE-A1-102016 220 871

## Beschreibung

### Beschreibung

Die Erfindung betrifft ein teilautonomes oder autonomes Kraftfahrzeug, insbesondere Nutzfahrzeug, und ein Verfahren zum Betreiben eines teilautonomen oder autonomen Kraftfahrzeugs.

Die US 2013/0179023 A1 offenbart ein Verfahren zum Informieren eines Kraftfahrzeugführers über ein von einem Fahrerassistenzsystem eines Kraftfahrzeugs geplantes und vom Kraftfahrzeug durchgeführtes Fahrmanöver. Das Verfahren umfasst die Erfassung aktueller Umfelddaten der vor dem Kraftfahrzeug liegenden Umgebung durch ein Erfassungsmittel, die Planung und Durchführung des Fahrmanövers auf der Grundlage der Umfelddaten und das Darstellen des Fahrmanövers und mindestens eines Teils der erkannten Umfelddaten in einem Bild auf einem Display.

Die DE 10 2014 214 514 A1 offenbart eine Vorrichtung zum Austausch von Daten zwischen Fahrzeugen zum Einrichten einer Kolonnenfahrt. Die Vorrichtung weist einen Bildschirm auf, insbesondere Gläser einer Datenbrille oder ein Head-Up-Display, der zur Anzeige einer erweiterten Realität eingerichtet ist.

Die US 8,269,652 B2 offenbart ein transparentes Windschutzscheiben-Head-Up-Display und ein Verfahren zum Anzeigen einer Grafik, die Verkehrsinformationen auf der Grundlage einer Fahrzeug-zu-Fahrzeug-Kommunikation auf dem Windschutzscheiben-Head-Up-Display.

Die DE 10 2014 208 352 A1 offenbart ein System sowie ein Verfahren zum Instruieren eines Teilnehmers eines Fahrertrainings. Das Verfahren umfassend die Schritte Ermitteln einer aktuellen Perspektive des Teilnehmers auf die Fahrzeugumgebung, und Darstellen eines bezüglich der Fahrzeugumgebung kontaktanalogen Inhaltes als Überlagerung eines natürlichen Sichtfeldes auf einer Anzeigeeinheit für den Teilnehmer des Fahrertrainings.

Nachteilig an bekannten System zum autonomen Fahren eines Kraftfahrzeugs kann sein, dass ein Insasse, z. B. eine Sicherheitsfahrer, des Kraftfahrzeugs bei einer erforderlichen Übernahme der Fahrzeugkontrolle aus einem autonomen Fahrbetrieb überfordert sein kann.

Der Erfindung liegt die Aufgabe zu Grunde, eine alternative oder verbesserte Technik für autonome Kraftfahrzeuge zu schaffen, mit der insbesondere Nachteile im Stand der Technik überwunden werden können.

Die Aufgabe wird gelöst durch die Merkmale der unabhängigen Ansprüche. Vorteilhafte Weiterbildungen sind in den abhängigen Ansprüchen und der Beschreibung angegeben.

Das Verfahren ist zum Betreiben eines teilautonomen oder autonomen Kraftfahrzeugs geeignet. Das Verfahren weist ein Betreiben des Kraftfahrzeugs in einem teilautonomen oder autonomen (z. B. vollautonomen) Betriebsmodus auf. Das Verfahren weist das Anzeigen eines virtuellen Hindernisses für das Kraftfahrzeug und/oder eines simulierten Fehlers des teilautonomen oder autonomen Betriebsmodus mittels einer Erweiterte-Realität-Anzeigeeinrichtung (Augmented Reality-Anzeigeeinrichtung, z. B. Head-Mounted-Display, insbesondere Datenbrille, und/oder ein Head-Up-Display) des Kraftfahrzeugs, während des teilautonomen oder autonomen Betriebsmodus, auf. Das Verfahren weist das Erfassen einer Reaktion eines Insassen, insbesondere eines Fahrers (z. B. Sicherheitsfahrers), des Kraftfahrzeugs, auf das Hindernis und/oder den simulierten Fehler, auf.

Das Verfahren ermöglicht ein Training eines Insassen eines autonomen Kraftfahrzeugs, insbesondere hinsichtlich einer erforderlichen Übernahme der Kontrolle aus dem teilautonomen oder autonomen Betriebsmodus. So kann beispielsweise auch ein Sicherheitsfahrer eines autonomen Kraftfahrzeugs für Testfahrten trainiert werden. Ferner ermöglich das Verfahren die Sammlung von Erkenntnissen darüber, wie die Reaktion eines Insassen eines autonomen Kraftfahrzeugs auf ein Hindernis oder Fehler unter bestimmten Bedingungen, zum Beispiel nachts, bei Müdigkeit, in Stresssituationen, nach einer (vor-) bestimmten km-Zahl oder einer (vor-) bestimmten Stundenzahl autonomer Fahrt, ist.

Beispielsweise kann die Erweiterte-Realität-Anzeigeeinrichtung als Video-Seethrough oder als Optical-Seethrough ausgeführt sein.

Zweckmäßig kann die Erweiterte-Realität-Anzeigeeinrichtung dazu ausgebildet sein, eine Realitätswahrnehmung durch die Darstellung von virtuellen Informationen und/oder Objekten mittels Einblendung und/oder Überlagerung zu ergänzen bzw. zu erweitern.

Es ist möglich, dass der teilautonome oder autonome Betriebsmodus bei oder nach Anzeige des virtuellen Hindernisses und/oder des simulierten Fehlers durch einen Fahreingriff (z. B. Lenkbewegung, Bremspedalbetätigung) des Insassen übersteuerbar ist.

In einem Ausführungsbeispiel ist das Anzeigen des virtuellen Hindernisses für das Kraftfahrzeug und/oder des simulierten Fehlers in dem teilautonomen oder autonomen Betriebsmodus zuschaltbar (z. B. mittels Benutzereingabe), insbesondere zum Training und/oder zur Überwachung des Insassen. Somit kann der Trainings- oder Überwachungsmodus mit virtuellem Hindernis und/oder simuliertem Fehler nur ausgeführt werden, wenn dies gewünscht ist, zum Beispiel bei einer Test-, Trainings- oder Überwachungsfahrt.

In einem weiteren Ausführungsbeispiel weist das virtuelle Hindernis eine abstrakte geometrische Form auf, insbesondere zumindest teilweise eine Kubusform, eine Kegelform und/oder eine Kugelform. Alternativ kann das virtuelle Hindernis eine, insbesondere wirklichkeitsgetreue, Abbildung eines anderen Verkehrsteilnehmers (zum Beispiel ein Foto oder eine Videosequenz), insbesondere eines anderen Kraftfahrzeug, eines Fahrradfahrers, eines Fußgängers, aufweisen.

In einer Weiterbildung ist das anzuzeigende virtuelle Hindernis voreinstellbar, insbesondere auswählbar aus einer abstrakten geometrische Form und/oder einer, insbesondere wirklichkeitsgetreuen, Abbildung eines anderen Verkehrsteilnehmers. Somit kann beispielsweise das Training oder die Überwachung des Insassen des autonomen Kraftfahrzeugs in Stufen erfolgen, mit einer ersten Stufe mit abstraktem, virtuellem Hindernis und einer zweiten Stufe mit wirklichkeitsgetreuen, virtuellem Hindernis.

In einer weiteren Ausführungsform weist das Erfassen der Reaktion ein Erfassen einer Reaktionszeit, eines Fahreingriffs (z. B. Fahrzeugübernahme durch den Insassen, Lenkbewegung zum Ausweichen, Bremspedalbetätigung zum Abbremsen), eines Pulses des Insassen und/oder einer Augenbewegung des Insassen auf. Die erfasste Reaktion kann beispielsweise für eine simultane Analyse verwendet oder spätere Analyse aufgezeichnet werden.

In einem Ausführungsbeispiel ist das virtuelle Hindernis und/oder der simulierte Fehler so konfiguriert, dass eine Übernahme einer Fahrzeugkontrolle durch den Insassen erforderlich ist. Alternativ oder zusätzlich wird bei Anzeige des virtuellen Hindernisses und/oder des simulierten Fehlers eine Warnung (z. B. akustisch, haptisch, visuell) an den Insassen ausgegeben, dass eine Übernahme einer Fahrzeugkontrolle durch den Insassen erforderlich ist.

Der simulierte Fehler kann aus einer Vielzahl von möglichen simulierten Fehlern, wie beispielhaft nachfolgend aufgeführt ist, ausgewählt sein.

In einem weiteren Ausführungsbeispiel weist der simulierte Fehler eine Abbildung einer Fehlerfassung durch eine Umgebungserfassungssensorik des Kraftfahrzeugs, insbesondere eines anderen Verkehrsteilnehmers, eines Hindernisses, einer Straßenbegrenzung, eines Straßenverlaufs, einer Spurbegrenzung, eines Spurverlaufs, einer Seitenstreifenbegrenzung, eines Seitenstreifenverlaufs, einer Spurmarkierung und/oder eines Spurmarkierungsverlaufs, auf. Alternativ oder zusätzlich weist der simulierte Fehler eine Nichterfassung eines anderen Verkehrsteilnehmers und/oder einer Spurmarkierung durch eine Umgebungserfassungssensorik des Kraftfahrzeugs auf.

In einem weiteren Ausführungsbeispiel weist der simulierte Fehler eine Abbildung einer Fehlbestimmung eines durch das Kraftfahrzeug befahrbaren Raums, eine Abbildung einer Fehlbestimmung einer geplanten Trajektorie des Kraftfahrzeugs und/oder eine Abbildung einer geplanten Trajektorie des Kraftfahrzeugs auf Kollisionskurs mit einem anderen Verkehrsteilnehmer und/oder einem (z. B. virtuellen oder tatsächlichen) Hindernis auf.

In einer Ausführungsvariante weist der simulierte Fehler eine Abbildung einer Fehlbestimmung eines Standorts durch eine, insbesondere satellitengestützte, Standortbestimmungsvorrichtung des Kraftfahrzeugs und/oder eine Abbildung einer Fehlinformation einer mittels einer Kommunikationsschnittstelle des Kraftfahrzeugs empfangenen Information auf.

In einer weiteren Ausführungsvariante erfolgt das Anzeigen des virtuellen Hindernisses für das Kraftfahrzeug und/oder des simulierten Fehlers in dem teilautonomen oder autonomen Betriebsmodus zufällig. Alternativ erfolgt das Anzeigen des virtuellen Hindernisses für das Kraftfahrzeug und/oder des simulierten Fehlers in dem teilautonomen oder autonomen Betriebsmodus bei Eintreten einer vorbestimmten Bedingung, insbesondere bei Nachtfahrt, bei erkannter Müdigkeit des Insassen, nach einer vorbestimmten Fahrstrecke (zum Beispiel 100 km oder 200 km) oder Fahrzeit (zum Beispiel 1 Stunde oder 2 Stunden) im teilautonomen oder autonomen Betriebsmodus.

In einer Ausführungsform erfolgt das Anzeigen des virtuellen Hindernisses für das Kraftfahrzeug und/oder des simulierten Fehlers in dem teilautonomen oder autonomen Betriebsmodus nur, wenn eine Umgebungserfassungssensorik des Kraftfahrzeugs erfasst, dass eine tatsächliche Umgebung des Kraftfahrzeugs frei von anderen Verkehrsteilnehmern und/oder Hindernissen ist. Somit kann verhindert werden, dass andere Verkehrsteilnehmer durch das Training gefährdet werden.

In einer weiteren Ausführungsform ist ein Fahreingriff des Insassen als Reaktion auf das virtuelle Hindernis und/oder den simulierten Fehler durch den teilautonomen oder autonomen Betriebsmodus übersteuerbar. Alternativ oder zusätzlich ist ein Fahreingriff des Insassen als Reaktion auf das virtuelle Hindernis und/oder den simulierten Fehler durch den teilautonomen oder autonomen Betriebsmodus überwacht und zum sicheren Betrieb des Kraftfahrzeugs übersteuerbar (z. B. durch Begrenzung des maximalen Lenkwinkels, der maximalen Beschleunigung und/oder der maximalen Verzögerung).

Die Erfindung betrifft auch ein teilautonomes oder autonomes Kraftfahrzeug, insbesondere Nutzfahrzeug. Das Kraftfahrzeug weist eine Steuereinheit auf, die dazu eingerichtet ist, ein Verfahren wie hierin offenbart auszuführen.

Der Begriff "Steuereinheit" kann sich auf eine Elektronik und/oder mechanische Steuerung beziehen, die je nach Ausbildung Steuerungsaufgaben und/oder Regelungsaufgaben übernehmen kann. Auch wenn hierin der Begriff "Steuern" verwendet wird, kann damit gleichsam zweckmäßig auch ,,Regeln" bzw. ,,Steuern mit Rückkopplung" umfasst sein.

In einem Ausführungsbeispiel weist das Kraftfahrzeug eine Erweiterte-Realität-Anzeigeeinrichtung, insbesondere eine Head-Mounted-Anzeigeeinrichtung, zum Beispiel Datenbrille, und/oder eine Head-Up-Anzeigeeinrichtung, die von der Steuereinheit zum Anzeigen des virtuellen Hindernisses und/oder des simulierten Fehlers ansteuerbar ist, auf. Alternativ oder zusätzlich weist das Kraftfahrzeug eine Umgebungserfassungssensorik zum Erfassen einer Umgebung des Kraftfahrzeugs, eine, insbesondere satellitengestützte, Standortbestimmungsvorrichtung und/oder eine Kommunikationsschnittstelle, insbesondere eine Fahrzeug-zu-Fahrzeug-Kommunikationsschnittstelle und/oder eine Fahrzeug-zu-Infrastruktur-Kommunikationsschnittstelle, auf.

Beispielsweise kann die Umgebungserfassungssensorik eine Umfeldsensorik, insbesondere eine Radarerfassungseinrichtung, eine Lidarerfassungseinrichtung, eine Lasererfassungseinrichtung, eine Ultraschallerfassungseinrichtung und/oder eine Kameraeinrichtung, des Kraftfahrzeugs aufweisen.

Weitere Einzelheiten und Vorteile der Erfindung werden im Folgenden unter Bezug auf die beigefügten Zeichnungen beschrieben. Es zeigen:
- Figur 1: eine schematische Darstellung eines Kraftfahrzeugs gemäß der vorliegenden Offenbarung;
- Figur 2: ein beispielhafter Ablauf mit beispielhaften Schritten eines Verfahrens gemäß der vorliegenden Offenbarung;
- Figur 3: eine Darstellung für einen Blick durch bzw. auf eine beispielhafte Erweiterte-Realität-Anzeigeeinrichtung auf einen vorausliegenden Streckenabschnitt;
- Figur 4: eine Darstellung für einen Blick durch bzw. auf die beispielhafte Erweiterte-Realität-Anzeigeeinrichtung bei Anzeige eines abstrakten virtuellen Hindernisses;
- Figur 5: eine Darstellung für einen Blick durch bzw. auf die beispielhafte Erweiterte-Realität-Anzeigeeinrichtung bei Anzeige eines realitätsnahen virtuellen Hindernisses;
- Figur 6: eine Darstellung für einen Blick durch bzw. auf die beispielhafte Erweiterte-Realität-Anzeigeeinrichtung bei Anzeige eines beispielhaften simulierten Fehlers (Nichtanzeige einer Erfassung eines anderen Verkehrsteilnehmers);
- Figur 7: eine Darstellung für einen Blick durch bzw. auf die beispielhafte Erweiterte-Realität-Anzeigeeinrichtung bei Anzeige eines beispielhaften simulierten Fehlers (fehlerhafte geplante Trajektorie); und
- Figur 8: eine Darstellung für einen Blick durch bzw. auf die beispielhafte Erweiterte-Realität-Anzeigeeinrichtung bei Anzeige eines beispielhaften simulierten Fehlers (fehlerhafte geplante Trajektorie mit Kollisionsrisiko).

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

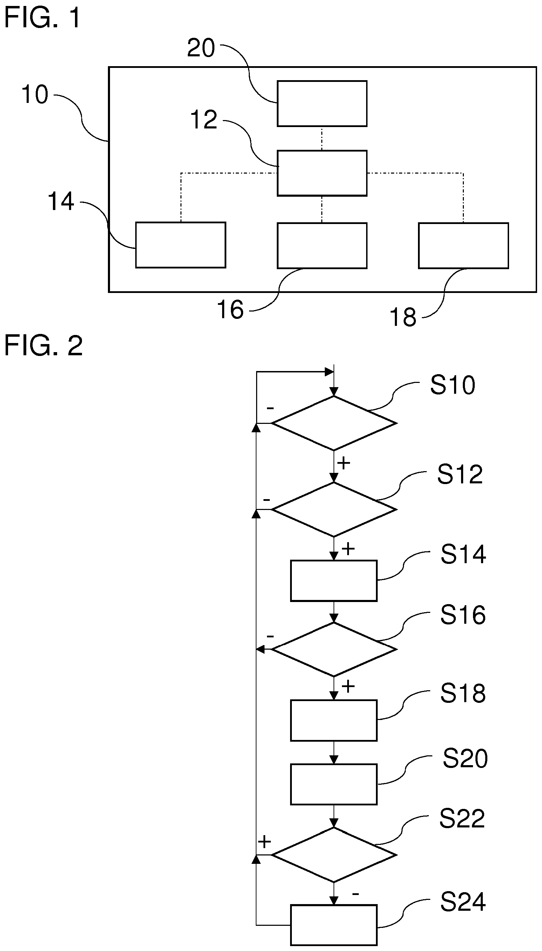

Die Figur 1 zeigt rein schematisch ein Kraftfahrzeug 10. Das Kraftfahrzeug 10 kann beispielsweise ein Nutzfahrzeug, wie ein Lastkraftwagen oder ein Omnibus, sein.

Das Kraftfahrzeug 10 weist eine Steuereinheit 12 auf. Die Steuereinheit 12 ist dazu ausgebildet, das Kraftfahrzeug 10 in einem teilautonomen oder autonomen, insbesondere vollautonomen, Betriebsmodus zu steuern. Im teilautonomen Betriebsmodus steuert die Steuereinheit 12 die Fahrt des Kraftfahrzeugs 10 teilweise autonom hinsichtlich bestimmter Aspekte, zum Beispiel automatisches Abstandsregelsystem, automatisches Geschwindigkeitsregelsystem usw.. Im autonom Betriebsmodus steuert die Steuereinheit 12 die Fahrt des Kraftfahrzeugs 10 im Wesentlichen vollständig. Beispielsweise kann die Steuereinheit 12 eine Fahrt von einem Startpunkt zu einem definierten Zielpunkt mit automatischen Lenk-, Beschleunigungs- und Bremsmanövern durchführen. Die Steuereinheit 12 kann mit einer Mehrzahl von Systemen des Kraftfahrzeugs 10 verbunden sein, um den teilautonomen oder autonome Betriebsmodus zu ermöglichen, wie beispielhaft nachfolgend beschrieben ist. Die Steuereinheit 12 kann beispielsweise mit Standard-Kommunikationsprotokollen mit anderen Komponenten kommunizieren. Die Steuereinheit 12 kann kabellos oder kabelgebunden mit anderen Komponenten kommunizieren.

Das Kraftfahrzeug 10 kann eine Umgebungserfassungssensorik oder Fahrzeugumfeldsensorik 14 aufweisen. Die Umgebungserfassungssensorik 14 steht in Kommunikationsverbindung mit der Steuereinheit 12. Die Umgebungserfassungssensorik 14 kann eine Umgebung des Kraftfahrzeugs 10 erfassen. Die Umgebungserfassungssensorik 14 kann beispielsweise eine Radarsystem, eine Lidarsystem, ein Ultraschallsystem, Lasersystem, ein Kamerasystem usw. aufweisen. Mittels der Umgebungserfassungssensorik 14 können insbesondere andere Verkehrsteilnehmer (zum Beispiel Kraftfahrzeuge, Fahrradfahrer, Fußgänger), Hindernisse, Spurmarkierungen, Straßenverläufe und/oder Verkehrsschilder erfasst werden.

Das Kraftfahrzeug 10 kann eine Standortbestimmungsvorrichtung 16 aufweisen. Die Standortbestimmungsvorrichtung 16 steht in Kommunikationsverbindung mit der Steuereinheit 12. Die Standortbestimmungsvorrichtung 16 kann beispielsweise eine satellitengestützte Standortbestimmungsvorrichtung sein, die eine Ermittlung eines aktuellen Standorts des Kraftfahrzeugs 10 ermöglicht. Zum Beispiel kann die Standortbestimmungsvorrichtung 16 eine GPS-Standortbestimmungsvorrichtung sein.

Das Kraftfahrzeug 10 kann eine Kommunikationsschnittstelle 18 aufweisen. Die Kommunikationsschnittstelle 18 steht in Kommunikationsverbindung mit der Steuereinheit 12. Die Kommunikationsschnittstelle 18 ermöglicht eine unidirektionale oder bidirektionale Kommunikation mit Kommunikationseinheiten extern des Kraftfahrzeugs 10. Zum Beispiel kann mittels der Kommunikationsschnittstelle 18 eine Fahrzeug-zu-Fahrzeug- und/oder eine Fahrzeug-zu-Infrastruktur-Kommunikation ermöglicht werden.

Das Kraftfahrzeug 10 weist eine Erweiterte-Realität-Anzeigeeinrichtung (Augmented-Reality-Anzeigeeinrichtung) 20 auf. Die Erweiterte-Realität-Anzeigeeinrichtung 20 steht in Kommunikationsverbindung mit der Steuereinheit 12. Die Steuereinheit 12 kann die Erweiterte-Realität-Anzeigeeinrichtung 20 zum Anzeigen von Information, Daten, Objekten usw. ansteuern. Die Erweiterte-Realität-Anzeigeeinrichtung 20 ist dazu ausgebildet, eine Realitätswahrnehmung durch die Darstellung von virtuellen Informationen und/oder Objekten mittels Einblendung und/oder Überlagerung zu ergänzen bzw. zu erweitern. Es ist auch möglich, dass sich die Erweiterte-Realität-Anzeigeeinrichtung 20 außerhalb des Kraftfahrzeugs 10 (zum Beispiel in einem Kontrollcenter) befindet und beispielsweise Funktionen des automatisierten Fahrens den jeweiligen Nutzern im Kontrollcenter visualisiert.

Die Erweiterte-Realität-Anzeigeeinrichtung 20 kann zum Beispiel als Video-Seethrough oder als Optical-Seethrough ausgeführt sein. Beispielsweise kann die Erweiterte-Realität-Anzeigeeinrichtung 20 als ein Head-Up-Display des Kraftahrzeugs 10 ausgebildet sein. Mit dem Head-Up-Display können virtuelle Objekte und Informationen auf eine Windschutzscheibe des Kraftfahrzeugs 10 projiziert werden können. Es ist zum Beispiel auch möglich, dass die erweiterte-Realität-Anzeigeeinrichtung 20 als transportables Medium ausgeführt ist, zum Beispiel als ein Tablet-Computer oder ein Head-Mounted-Display, das am Kopf eines Insassen des Kraftfahrzeugs 10 getragen wird, zum Beispiel als eine Brille.

Zur perspektivisch korrekten Anzeige von Information und Objekten bezüglich einer Perspektive eines Insassen, insbesondere eines Fahrers, des Kraftfahrzeugs 10, kann eine Kalibrierung der Erweiterte-Realität-Anzeigeeinrichtung 20 durchgeführt werden. Die Kalibrierung kann beispielsweise bei einer kraftfahrzeugfesten Erweiterte-Realität-Anzeigeeinrichtung 20, zum Beispiel einem Head-Up-Display, einmalig durchgeführt werden. Es ist auch möglich, die Kalibrierung bei einer bewegbaren Erweiterte-Realität-Anzeigeeinrichtung 20, zum Beispiel ein Head-Mounted-Display, mehrmals oder kontinuierlich durchzuführen. Hierbei kann beispielsweise über Markierungen und/oder charakteristische Merkmale im oder am Kraftfahrzeug 10, insbesondere im oder am Fahrerhaus des Kraftfahrzeugs 10, eine Lokalisation der Erweiterte-Realität-Anzeigeeinrichtung 20 durchgeführt werden. Als charakteristische Merkmale können beispielsweise ein Lenkrad, eine A-Säule und/oder eine Armaturentafel des Kraftfahrzeugs 10 verwendet werden. Basierend auf dieser Lokalisation bzw. Kalibrierung der Erweiterte-Realität-Anzeigeeinrichtung 20 können die von der Erweiterte-Realität-Anzeigeeinrichtung 20 dargestellten Informationen und Objekte perspektivisch korrekt dargestellt und der Realität überlagert werden.

Gemäß der vorliegenden Offenbarung wird die Erweiterte-Realität-Anzeigeeinrichtung 20 insbesondere dazu genutzt, den Insassen des Kraftfahrzeugs 10 zu ermöglichen, den teilautonomen oder autonomen (vollautonomen) Betriebsmodus des Kraftfahrzeugs 10 nachzuvollziehen. Insbesondere kann die Erweiterte-Realität-Anzeigeeinrichtung 20 zur Visualisierung von Fahrfunktionen genutzt werden. Zum Beispiel kann die Erweiterte-Realität-Anzeigeeinrichtung 20 erfasste andere Verkehrsteilnehmer, erfasste Verkehrszeichen, erfasste Spurmarkierungen, gewünschte Geschwindigkeiten, für das Kraftfahrzeug 10 befahrbare Räume und/oder geplante Trajektorien und/oder Geschwindigkeiten des eigenen Kraftfahrzeugs 10 oder anderer Verkehrsteilnehmer, z. B. Kraftfahrzeuge, der Realität überlagern. Die geplanten Trajektorien anderer Verkehrsteilnehmer können bspw. direkt von den anderen Verkehrsteilnehmern über die Kommunikationsschnittstelle 18 empfangen werden oder geschätzt werden. So kann einerseits der Entwickler konkret einsehen, ob die verwendeten Daten mit der Realität übereinstimmen und die Funktion des (teil-) autonomen Betriebsmodus überprüfen. Andererseits bekommt ein Insasse des Kraftfahrzeugs 10 einen Eindruck von der Funktionsweise des (teil-) autonomen Betriebsmodus und kann frühzeitig Entscheidungen des (teil-) autonomen Betriebsmodus nachvollziehen. Die Visualisierung der Fahrfunktionen kann somit dabei helfen, das Vertrauen und das Verständnis der Fahrzeuginsassen gegenüber dem (teil-) autonom Betriebsmodus zu erhöhen. Denkbar wäre es zudem, dass den Fahrzeuginsassen die Möglichkeit gegeben wird, mittels Gestensteuerung Benutzereingaben für den (teil-) autonomen Betriebsmodus vorzunehmen und somit mit dem (teil-) autonomen Betriebsmodus zu interagieren.

Es ist auch möglich, beispielsweise Berufskraftfahrern beim sogenannten Platooning mittels der Erweiterte-Realität-Anzeigeeinrichtung 20 Informationen bereitzustellen, um diesen zusätzliche Möglichkeiten zu geben, die Fahrentscheidungen optimal mit den Möglichkeiten beim Platooning abzustimmen. So können teilautomatisierte Fahrfunktionen schon frühzeitig effizient in den aktuellen Güterverkehr integriert werden.

Beim Betreiben des Kraftfahrzeugs 10 in einem teilautonomen oder autonomen Betriebsmodus können nicht-standardisierte Situationen, insbesondere Fahrsituationen, auftreten, die es erforderlich machen, dass eine Kontrolle über das Kraftfahrzeug 10 an einen Insassen des Kraftfahrzeugs 10 zurückgegeben wird. Es ist auch möglich, dass der teilautonome oder autonome Betriebsmodus einen Fehler aufweist, sodass eine Steuerung des Kraftfahrzeugs 10 durch einen Insassen erforderlich ist. Die vorliegende Offenbarung befasst sich unter anderem damit, einen Fahrer, insbesondere einen Sicherheitsfahrer, des Kraftfahrzeugs 10 auf solche Situationen vorzubereiten. Es wird insbesondere vorgeschlagen, dass mittels der Erweiterte-Realität-Anzeigeeinrichtung 20 virtuelle Hindernisse und/oder simulierte Fehler angezeigt werden, die einen Eingriff des Fahrers erforderlich machen. Beispielsweise kann die Reaktion des Fahrers auf das virtuelle Hindernis und/oder den simulierten Fehler zur späteren Auswertung erfasst werden.

In Figur 2 ist rein beispielhaft ein Verfahren gemäß der vorliegenden Offenbarung dargestellt. Das Verfahren kann beispielsweise von der Steuereinheit 12 des Kraftfahrzeugs 10 durchgeführt werden. Das Verfahren von Figur 2 ist nachfolgend unter Bezugnahme auf die Figur 1 beschrieben. Es wird darauf hingewiesen, dass das Verfahren von Figur 2 und dessen einzelne Verfahrensschritte rein beispielhaft sind, und eine praktische Implementierung des Verfahrens zusätzliche, alternative oder weniger Verfahrensschritte aufweisen kann.

Im Schritt S10 kann geprüft werden, ob das Kraftfahrzeug 10 in einem teilautonomen oder autonomen Betriebsmodus (+) oder einem vom Fahrer des Kraftfahrzeugs 10 gesteuerten Betriebsmodus (-) ist. Befindet sich das Kraftfahrzeug 10 in einem teilautonomen oder autonomen Betriebsmodus, wird das Verfahren mit Schritt S12 fortgesetzt.

Im Schritt S12 kann geprüft werden, ob ein Trainingsmodus oder Überwachungsmodus des Kraftfahrzeugs 10 aktiviert bzw. zugeschaltet ist (+) oder nicht (-). Damit kann sichergestellt werden, dass der Trainingsmodus oder Überwachungsmodus nur durchgeführt wird, wenn dies tatsächlich gewünscht ist, zum Beispiel bei Testfahrten mit dem Kraftfahrzeug 10. Ist der Trainingsmodus oder Überwachungsmodus aktiviert, so wird das Verfahren mit Schritt S14 fortgesetzt.

Im Schritt S14 kann mittels der Umgebungserfassungssensorik 14 eine Fahrzeugumgebung erfasst werden. Dies kann beispielsweise die Erfassung anderer Verkehrsteilnehmer im Umfeld des Kraftfahrzeugs 10, eines momentanen Streckenverlaufs, einer Witterung usw. betreffen. Das Verfahren wird mit Schritt S16 fortgesetzt.

Im Schritt S16 kann geprüft werden, ob die im Schritt S14 erfasste Fahrzeugumgebung geeignet ist, um ein Training des Fahrers des Kraftfahrzeugs 10 durchzuführen (+) oder nicht (-). Beispielsweise kann überprüft werden, dass keine anderen Verkehrsteilnehmer in einer näheren Umgebung des Kraftfahrzeugs 10 vorhanden sind, die bei einem eventuellen Reaktionsmanöver des Fahrers des Kraftfahrzeugs 10 behindert oder beschädigt werden könnten. Es ist auch möglich, dass erfasst wird, dass ein risikoarmer Straßenverlauf, zum Beispiel ein geradliniger Straßenverlauf und/oder risikoarme Witterungsverhältnisse, zum Beispiel keine Glätte usw., vorliegt. Ist die erfasste Fahrzeugumgebung für ein Training des Fahrers des Kraftfahrzeugs 10 geeignet, wird das Verfahren mit Schritt S18 fortgesetzt.

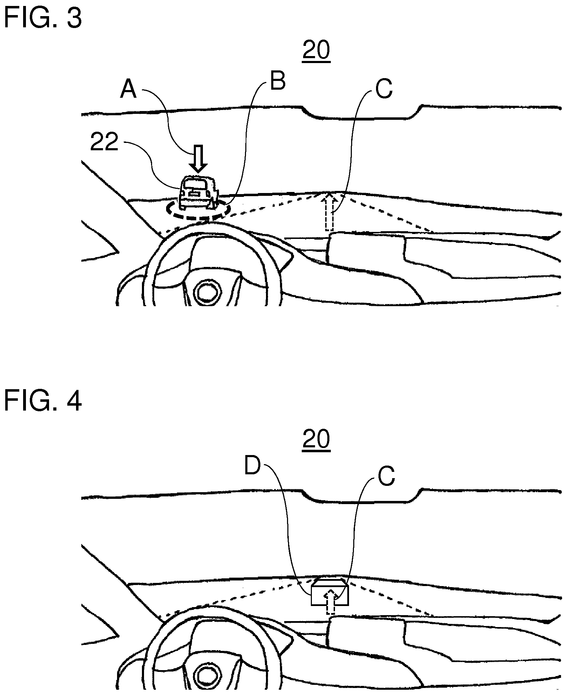

Im Schritt S18 kann ein virtuelles Hindernis und/oder ein simulierter Fehler über die Erweiterte-Realität-Anzeigeeinrichtung 20 angezeigt werden. Das virtuelle Hindernis oder der simulierte Fehler können dergestalt sein, dass für den Insassen bzw. Fahrer des Kraftfahrzeugs 10 klar ist, dass ein manueller Fahrzeugeingriff erforderlich ist. Zusätzlich oder alternativ ist es möglich, dass eine beispielsweise akustische, optische und/oder visuelle Warnung ausgegeben wird, dass eine Übernahme einer Fahrzeugkontrolle durch den Fahrer des Kraftfahrzeugs 10 erforderlich ist. Beispiele für virtuelle Hindernisse und simulierte Fehler sind hierin beispielsweise unter Bezugnahme auf die Figuren 3 bis 8 beschrieben. Das Verfahren fährt mit dem Schritt S20 fort.

Im Schritt S20 kann eine Fahrerreaktion bzw. eine Insassenreaktion des Kraftfahrzeugs 10 in Reaktion auf das im Schritt S18 angezeigt virtuelle Hindernis und/oder den simulierten Fehler erfasst werden. Dies kann beispielsweise das Erfassen einer Reaktionszeit, eines Fahreingriffs (z. B. Lenkbewegung, Bremspedalbetätigung), eines Pulses des Fahrers und/oder einer Augenbewegung des Fahrers betreffen. Die Reaktion kann beispielsweise zur späteren Analyse und Auswertung aufgezeichnet werden. Das Verfahren kann mit dem Schritt S22 fortfahren.

Im Schritt S22 kann von der Steuereinheit 12 gleichzeitig mit der Erfassung der Fahrerreaktion (zum Beispiel Lenkeingriff, Bremspedalbetätigung) geprüft werden, ob die Fahrerreaktion zu einer für das Kraftfahrzeug 10 und dessen Insassen gefährlichen Situation führen kann (+) oder nicht (-). Beispielsweise kann der Lenkeingriff zu groß sein, sodass ein Ausbrechen des Kraftfahrzeugs 10 zu befürchten ist oder bereits stattfindet. In dem Fall, in dem bestimmt wird, dass die Fahrerreaktion zu einer gefährlichen Situation führen kann, kann das Verfahren mit Schritt S24 fortgesetzt werden.

Im Schritt S24 kann ein teilautonomer oder autonome Betriebsmodus des Kraftfahrzeugs 10 die Fahrerreaktion zumindest teilweise übersteuern, sodass durch die Fahrerreaktion bedingte, (möglicherweise) gefährliche Situationen verhindert, aufgelöst oder abgemildert werden können. Beispielsweise kann ein manueller Lenkeingriff durch die Steuereinheit 12 verringert werden, um ein Ausbrechen des Kraftfahrzeugs 10, eine Kollision o.a. zu verhindern.

Es wird darauf hingewiesen, dass insbesondere die Schritte S10 bis S16 sowie S22 bis S24 optional sein können, und beispielsweise lediglich der Schritt S18 und/oder der Schritt S20 in einem Verfahren gemäß der vorliegenden Offenbarung ausgeführt werden kann.

Nachfolgend ist unter Bezugnahme auf die Figuren 3 bis 8 die Erweiterte-Realität-Anzeigeeinrichtung 20 sowie virtuelle Hindernisse und simulierte Fehler beispielhaft beschrieben.

Die Figur 3 zeigt die Erweiterte-Realität-Anzeigeeinrichtung 20, wobei ein anderes Kraftfahrzeug 22 mittels eines insbesondere farbigen Pfeils A und eines insbesondere farbigen Kreises B durch die Erweiterte-Realität-Anzeigeeinrichtung 20 markiert ist. Der Fahrer bzw. Insasse des Kraftfahrzeugs 10 kann somit während des teilautonomen oder autonomen Betriebsmodus erkennen, dass das andere Kraftfahrzeug 22 von der Umgebungssensorik 14 erfasst wurde. Zusätzlich ist eine geplante Trajektorie C durch die Erweiterte-Realität-Anzeigeeinrichtung 20 eingeblendet. Der Fahrer bzw. Insasse des Kraftfahrzeugs 10 weiß daher, dass eine gradlinige Trajektorie für das Kraftfahrzeug 10 ohne Spurwechsel durch den teilautonomen oder autonomen Betriebsmodus geplant ist. Dem Fahrer bzw. Insassen des Kraftfahrzeugs wird dadurch geholfen, die von dem Kraftfahrzeug 10 durchgeführten Manöver im teilautonomen oder autonomen Betriebsmodus im Vorfeld zu erkennen und besser nachvollziehen zu können.

Die Figur 4 zeigt die Erweiterte-Realität-Anzeigeeinrichtung 20 bei Einblendung eines virtuellen Hindernisses zum Training einer Reaktion des Fahrers des Kraftfahrzeugs 10. Hier wird ein abstraktes Hindernis D, zum Beispiel ein Quader, ein Kegel oder eine Kugel, im Fahrweg der geplanten Trajektorie C des Kraftfahrzeugs 10 eingeblendet. Um eine Kollision mit dem virtuellen Hindernis D zu verhindern, muss der Fahrer die Kontrolle über das Kraftfahrzeug 10 übernehmen und beispielsweise ausweichen und/oder bremsen.

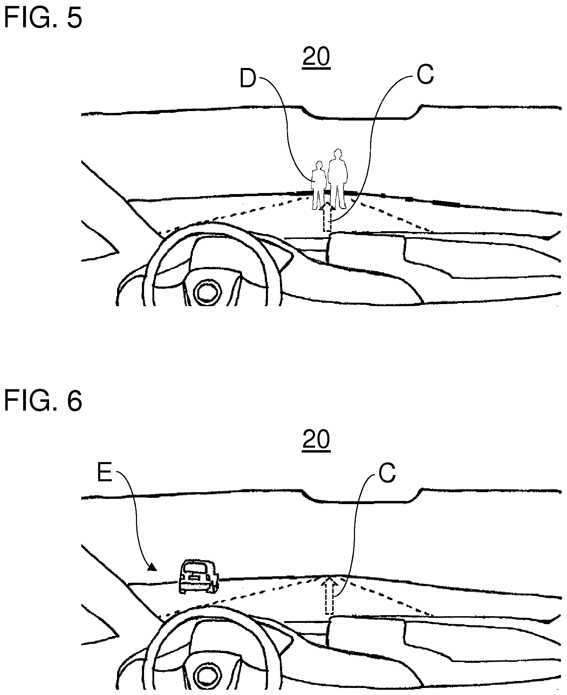

Die Figur 5 zeigt die Erweiterte-Realität-Anzeigeeinrichtung 20 bei Einblendung eines realitätsnahen bzw. wirklichkeitsgetreuen Hindernisses D zum Training einer Reaktion des Fahrers des Kraftfahrzeugs 10. Hier werden als realitätsnahes Hindernis D zwei Fußgänger dargestellt, die sich im Fahrweg der geplanten Trajektorie C des Kraftfahrzeugs 10 befinden. Um eine Kollision mit dem virtuellen Hindernis D zu verhindern, muss der Fahrer die Kontrolle über das Kraftfahrzeug 10 übernehmen und beispielsweise ausweichen und/oder bremsen. Zusätzliche oder alternative realitätsnahe Hindernisse können beispielsweise Kraftfahrzeuge, Fahrradfahrer, Geröll, umgestürzte Bäume und/oder ähnliches aufweisen. Es ist möglich, dass das realitätsnahe Hindernis D in Form einer eines Fotos oder einer Videosequenz eingeblendet wird, sodass der Insasse bzw. Fahrer des Kraftfahrzeugs 10 bei Betrachten der Erweiterte-Realität-Anzeigeeinrichtung 20 nicht oder nicht ohne Weiteres erkennt, dass es sich beim Hindernis D lediglich um ein virtuelles Hindernis handelt.

Die Figur 6 zeigt die Erweiterte-Realität-Anzeigeeinrichtung 20 bei Anzeige eines simulierten Fehlers E. Es wird zwar die geplante Trajektorie C mit der Wirklichkeit überlagert durch die Erweiterte-Realität-Anzeigeeinrichtung 20 eingeblendet, allerdings wird nicht beispielsweise mittels spezieller Markierungen (vgl. Figur 3) eingeblendet, dass das andere Kraftfahrzeug 22 erfasst wurde. In dieser Situation muss der Insasse bzw. Fahrer des Kraftfahrzeugs 10 davon ausgehen, dass die Umgebungssensorik 14 des Kraftfahrzeugs 10 und/oder der teilautonome oder autonome Betriebsmodus des Kraftfahrzeugs 10 nicht richtig arbeitet.

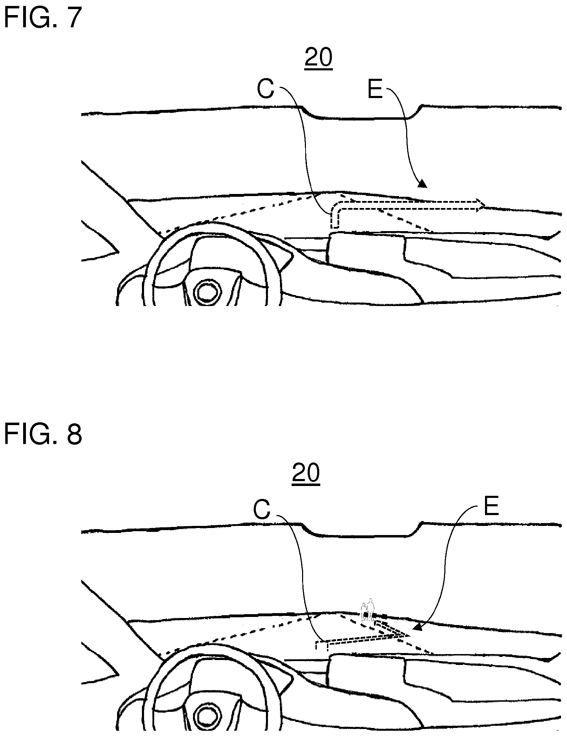

Die Figuren 7 und 8 zeigen die Erweiterte-Realität-Anzeigeeinrichtung 20 ebenfalls bei Anzeige eines simulierten Fehlers E. In der Figur 7 wird eine fehlerhafte, geplante Trajektorie C eingeblendet, die nicht dem Straßenverlauf entspricht. In der Figur 8 wird eine geplante Trajektorie C eingeblendet, die eine Kollision mit einem anderen (zum Beispiel virtuellen) Verkehrsteilnehmer zur Folge hätte.

Als simulierte Fehler kommen viele weitere Möglichkeiten in Betracht. Beispielsweise können als simulierte Fehler Fehl- oder Nichterfassungen eines (tatsächlichen oder virtuellen) Hindernisses, einer Straßenbegrenzung, eines Straßenverlaufs, einer Spurbegrenzung, eines Spurverlaufs, einer Seitenstreifenbegrenzung, eines Seitenstreifenverlaufs, einer Spurmarkierung und/oder eines Spurmarkierungsverlaufs in Betracht kommen. Es ist auch möglich, dass als ein simulierter Fehler eine Fehlbestimmung eines durch das Kraftfahrzeug befahrbaren Raums durch die Erweiterte-Realität-Anzeigeeinrichtung 20 eingeblendet wird. Beispielsweise kann auch ein Fehler betreffend eines von der Standortbestimmungsvorrichtung 16 (siehe Figur 1) bestimmten Standorts des Kraftfahrzeugs 10 und/oder einer über die Kommunikationsschnittstelle 18 (siehe Figur 1) empfangenen Information durch die Erweiterte-Realität-Anzeigeeinrichtung 20 eingeblendet werden. Es ist auch beispielsweise möglich, dass lediglich mittels Text und/oder Symbol durch die Erweiterte-Realität-Anzeigeeinrichtung 20 eingeblendet wird, dass ein Fehler beim teilautonomen oder autonome Betriebsmodus vorliegt.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen, sofern diese in den von den Ansprüchen definierten Schutzbereich fallen.

### Bezugszeichenliste

- 10: Kraftfahrzeug
- 12: Steuereinheit
- 14: Umgebungserfassungssensorik
- 16: Standortbestimmungsvorrichtung
- 18: Kommunikationsschnittstelle
- 20: Erweiterte-Realität-Anzeigeeinrichtung
- 22: Anderes Kraftfahrzeug
- A: Pfeilmarkierung
- B: Kreismarkierung
- C: Geplante Trajektorie
- D: Virtuelles Hindernis
- E: Simulierter Fehler

## Patentansprüche

1. Verfahren zum Betreiben eines teilautonomen oder autonomen Kraftfahrzeugs (10), aufweisend:
Betreiben des Kraftfahrzeugs (10) in einem teilautonomen oder autonomen Betriebsmodus;
Anzeigen eines virtuellen Hindernisses (D) für das Kraftfahrzeug (10) und/oder eines simulierten Fehlers (E) des teilautonomen oder autonomen Betriebsmodus mittels einer Erweiterte-Realität-Anzeigeeinrichtung (20) des Kraftfahrzeugs (10) während des teilautonomen oder autonomen Betriebsmodus; und
Erfassen einer Reaktion eines Insassen, insbesondere eines Fahrers, des Kraftfahrzeugs (10) auf das Hindernis und/oder den simulierten Fehler.

2. Verfahren nach Anspruch 1, wobei:
das Anzeigen des virtuellen Hindernisses (D) für das Kraftfahrzeug (10) und/oder des simulierten Fehlers (E) in dem teilautonomen oder autonomen Betriebsmodus zuschaltbar ist, insbesondere zum Training und/oder zur Überwachung des Insassen.

3. Verfahren nach Anspruch 1 oder Anspruch 2, wobei:
das virtuelle Hindernis (D) eine abstrakte geometrische Form aufweist, insbesondere zumindest teilweise eine Kubusform, eine Kegelform und/oder eine Kugelform.

4. Verfahren nach einem der vorherigen Ansprüche, wobei:
das virtuelle Hindernis (D) eine, insbesondere wirklichkeitsgetreue, Abbildung eines anderen Verkehrsteilnehmers, insbesondere eines anderen Kraftfahrzeugs, eines Fahrradfahrers, eines Fußgängers, aufweist.

5. Verfahren nach einem der vorherigen Ansprüche, wobei:
das anzuzeigende virtuelle Hindernis (D) voreinstellbar ist, insbesondere auswählbar aus einer abstrakten geometrische Form und/oder einer, insbesondere wirklichkeitsgetreuen, Abbildung eines anderen Verkehrsteilnehmers ist.

6. Verfahren nach einem der vorherigen Ansprüche, wobei:
das Erfassen der Reaktion ein Erfassen einer Reaktionszeit, eines Fahreingriffs, eines Pulses des Insassen und/oder einer Augenbewegung des Insassen aufweist.

7. Verfahren nach einem der vorherigen Ansprüche, wobei:
das virtuelle Hindernis (D) und/oder der simulierte Fehler (E) so konfiguriert sind, dass eine Übernahme einer Fahrzeugkontrolle durch den Insassen erforderlich ist; und/oder
bei Anzeige des virtuellen Hindernisses (D) und/oder des simulierten Fehlers (E) eine Warnung an den Insassen ausgegeben wird, dass eine Übernahme einer Fahrzeugkontrolle durch den Insassen erforderlich ist.

8. Verfahren nach einem der vorherigen Ansprüche, wobei der simulierte Fehler (E) aufweist:
eine Abbildung einer Fehlerfassung durch eine Umgebungserfassungssensorik (14) des Kraftfahrzeugs (10), insbesondere eines anderen Verkehrsteilnehmers, eines Hindernisses, einer Straßenbegrenzung, eines Straßenverlaufs, einer Spurbegrenzung, eines Spurverlaufs, einer Seitenstreifenbegrenzung, eines Seitenstreifenverlaufs, einer Spurmarkierung und/oder eines Spurmarkierungsverlaufs; und/oder
eine Nichterfassung eines anderen Verkehrsteilnehmers (22) und/oder einer Spurmarkierung durch eine Umgebungserfassungssensorik (14) des Kraftfahrzeugs (10).

9. Verfahren nach einem der vorherigen Ansprüche, wobei der simulierte Fehler (E) aufweist:
eine Abbildung einer Fehlbestimmung eines durch das Kraftfahrzeug (10) befahrbaren Raums; und/oder
eine Abbildung einer Fehlbestimmung einer geplanten Trajektorie (C) des Kraftfahrzeugs (10); und/oder
eine Abbildung einer geplanten Trajektorie des Kraftfahrzeugs (10) auf Kollisionskurs mit einem anderen Verkehrsteilnehmer und/oder einem Hindernis.

10. Verfahren nach einem der vorherigen Ansprüche, wobei der simulierte Fehler (E) aufweist:
eine Abbildung einer Fehlbestimmung eines Standorts durch eine, insbesondere satellitengestützte, Standortbestimmungsvorrichtung (16) des Kraftfahrzeugs (10), und/oder
eine Abbildung einer Fehlinformation einer mittels einer Kommunikationsschnittstelle (18) des Kraftfahrzeugs (10) empfangenen Information.

11. Verfahren nach einem der vorherigen Ansprüche, wobei:
das Anzeigen des virtuellen Hindernisses (D) für das Kraftfahrzeug (10) und/oder des simulierten Fehlers (E) in dem teilautonomen oder autonomen Betriebsmodus zufällig erfolgt; oder
das Anzeigen des virtuellen Hindernisses (D) für das Kraftfahrzeug (10) und/oder des simulierten Fehlers (E) in dem teilautonomen oder autonomen Betriebsmodus bei Eintreten einer vorbestimmten Bedingung, insbesondere bei Nachtfahrt, bei erkannter Müdigkeit des Insassen, nach einer vorbestimmten Fahrstrecke oder Fahrzeit im teilautonomen oder autonomen Betriebsmodus, erfolgt.

12. Verfahren nach einem der vorherigen Ansprüche, wobei:
das Anzeigen des virtuellen Hindernisses (D) für das Kraftfahrzeug (10) und/oder des simulierten Fehlers (E) in dem teilautonomen oder autonomen Betriebsmodus nur erfolgt, wenn eine Umgebungserfassungssensorik (14) des Kraftfahrzeugs (10) erfasst, dass eine tatsächliche Umgebung des Kraftfahrzeugs (10) frei von anderen Verkehrsteilnehmern und/oder Hindernissen ist.

13. Verfahren nach einem der vorherigen Ansprüche, wobei:
ein Fahreingriff des Insassen als Reaktion auf das virtuelle Hindernis (D) und/oder den simulierten Fehler (E) durch den teilautonomen oder autonomen Betriebsmodus übersteuerbar ist; und/oder
ein Fahreingriff des Insassen als Reaktion auf das virtuelle Hindernis (D) und/oder den simulierten Fehler (E) durch den teilautonomen oder autonomen Betriebsmodus überwacht und zum sicheren Betrieb des Kraftfahrzeugs (10) übersteuerbar ist.

14. Teilautonomes oder autonomes Kraftfahrzeug (10), insbesondere Nutzfahrzeug, aufweisend:
eine Steuereinheit (12), die dazu eingerichtet ist, ein Verfahren nach einem der vorherigen Ansprüche auszuführen.

15. Kraftfahrzeug (10) nach Anspruch 14, ferner aufweisend:
eine Erweiterte-Realität-Anzeigeeinrichtung (20), insbesondere eine Head-Mounted-Anzeigeeinrichtung und/oder eine Head-Up-Anzeigeeinrichtung, die von der Steuereinheit (12) zum Anzeigen des virtuellen Hindernisses (D) und/oder des simulierten Fehlers (E) ansteuerbar ist, und/oder
eine Umgebungserfassungssensorik (14) zum Erfassen einer Umgebung des Kraftfahrzeugs (10); und/oder
eine, insbesondere satellitengestützte, Standortbestimmungsvorrichtung (16); und/oder
eine Kommunikationsschnittstelle (18), insbesondere eine Fahrzeug-zu-Fahrzeug-Kommunikationsschnittstelle und/oder eine Fahrzeug-zu-Infrastruktur-Kommunikationsschnittstelle.

## Claims

1. A method for operating a partially autonomous or autonomous motor vehicle (10), comprising:
operating the motor vehicle (10) in a partially autonomous or autonomous operating mode;
displaying a virtual obstacle (D) for the motor vehicle (10) and/or a simulated error (E) of the partially autonomous or autonomous operating mode by means of an augmented-reality display device (20) of the motor vehicle (10) during the partially autonomous or autonomous operating mode; and
detecting a reaction of an occupant, in particular a driver, of the motor vehicle (10) to the obstacle and/or simulated error.

2. The method according to Claim 1, wherein:
the displaying of the virtual obstacle (D) for the motor vehicle (10) and/or the simulated error (E) in the partially autonomous or autonomous operating mode can be activated, in particular for training and/or monitoring the occupant.

3. The method according to Claim 1 or 2, wherein:
the virtual obstacle (D) has an abstract geometrical form, in particular at least partially the form of a cube, the form of a cone and/or the form of a sphere.

4. The method according to one of the preceding claims, wherein:
the virtual obstacle (D) comprises a depiction, in particular a realistic depiction, of another road user, in particular another motor vehicle, a cyclist or a pedestrian.

5. The method according to one of the preceding claims, wherein:
the virtual obstacle (D) to be displayed can be preset, in particular can be selected from an abstract geometrical form and/or a depiction, in particular a realistic depiction, of another road user.

6. The method according to one of the preceding claims, wherein:
the detection of the reaction comprises a detection of a reaction time, a driving intervention, a pulse of the occupant and/or an eye movement of the occupant.

7. The method according to one of the preceding claims, wherein:
the virtual obstacle (D) and/or the simulated error (E) are configured so as to require a takeover of vehicle control by the occupant; and/or
when the virtual obstacle (D) and/or the simulated error (E) is displayed, a warning is issued to the occupant that a takeover of vehicle control by the occupant is required.

8. The method according to one of the preceding claims, wherein the simulated error (E) comprises:
a depiction of the detection of an error by an environment-detecting sensor system (14) of the motor vehicle (10), in particular another road user, an obstacle, a road delimitation, the course of a road,
a lane delimitation, the course of a lane, a hard shoulder delimitation, the course of a hard shoulder, a lane marking and/or the course of a lane marking; and/or
a failure to detect another road user (22) and/or a lane marking by an environment-detecting sensor system (14) of the motor vehicle (10).

9. The method according to one of the preceding claims, wherein the simulated error (E) comprises:
a depiction of an incorrect determination of a space being driven through by the motor vehicle (10); and/or
a depiction of an incorrect determination of a planned trajectory (C) of the motor vehicle (10) : and/or
a depiction of a planned trajectory of the motor vehicle (10) on a collision course with another road user and/or an obstacle.

10. The method according to one of the preceding claims, wherein the simulated error (E) comprises:
a depiction of an incorrect determination of a location by a location determining device (16), in particular a satellite-based location determining device, of the motor vehicle (10), and/or
a depiction of an incorrect item of information of information received by means of a communication interface (18) of the motor vehicle (10).

11. The method according to one of the preceding claims, wherein:
the displaying of the virtual obstacle (D) for the motor vehicle (10) and/or the simulated error (E) in the partially autonomous or autonomous operating mode takes place randomly; or
the displaying of the virtual obstacle (D) for the motor vehicle (10) and/or the simulated error (E) in the partially autonomous or autonomous operating mode takes place when a predetermined condition occurs, in particular when driving at night, when tiredness of the occupant is detected, after a predetermined driving distance or driving time in the partially autonomous or autonomous operating mode.

12. The method according to one of the preceding claims, wherein:
the displaying of the virtual obstacle (D) for the motor vehicle (10) and/or the simulated error (E) in the partially autonomous or autonomous operating mode only takes place if an environment-detecting sensor system (14) of the motor vehicle (10) detects that the actual environment of the motor vehicle (10) is free from other road users and/or obstacles.

13. The method according to one of the preceding claims, wherein:
a driving intervention by the occupant as a reaction to the virtual obstacle (D) and/or the simulated error (E) can be overridden by the partially autonomous or autonomous operating mode; and/or
a driving intervention by the occupant as a reaction to the virtual obstacle (D) and/or the simulated error (E) is monitored by the partially autonomous or autonomous operating mode and can be overridden for safe operation of the motor vehicle (10).

14. A partially autonomous or autonomous motor vehicle (10), in particular a commercial vehicle, comprising:
a control unit (12), which is designed to perform a method according to one of the preceding claims.

15. The motor vehicle (10) according to Claim 14, also comprising:
an augmented-reality display device (20), in particular a head-mounted display device and/or a head-up display device, which can be controlled by the control unit (12) for displaying the virtual obstacle (D) and/or the simulated error (E), and/or
an environment-detecting sensor system (14) for detecting an environment of the motor vehicle (10); and/or
a location determining device (16), in particular a satellite-based location determining device, and/or
a communication interface (18), in particular a vehicle-to-vehicle communication interface and/or a vehicle-to-infrastructure communication interface.

## Revendications

1. Procédé permettant de faire fonctionner un véhicule automobile (10) partiellement autonome ou autonome, présentant les étapes consistant à :
faire fonctionner le véhicule automobile (10) dans un mode de fonctionnement partiellement autonome ou autonome ;
afficher un obstacle virtuel (D) pour le véhicule automobile (10) et/ou une erreur simulée (E) du mode de fonctionnement partiellement autonome ou autonome au moyen d'un dispositif d'affichage à réalité augmentée (20) du véhicule automobile (10) pendant le mode de fonctionnement partiellement autonome ou autonome ; et
détecter une réaction d'un occupant, en particulier d'un conducteur, du véhicule automobile (10) à l'obstacle et/ou à l'erreur simulée.

2. Procédé selon la revendication 1, dans lequel :
l'affichage de l'obstacle virtuel (D) pour le véhicule automobile (10) et/ou de l'erreur simulée (E) peut être mis en circuit dans le mode de fonctionnement partiellement autonome ou autonome, en particulier pour la formation et/ou la surveillance de l'occupant.

3. Procédé selon la revendication 1 ou la revendication 2, dans lequel :
l'obstacle virtuel (D) présente une forme géométrique abstraite, en particulier au moins en partie une forme cubique, une forme conique et/ou une forme sphérique.

4. Procédé selon l'une quelconque des revendications précédentes, dans lequel :
l'obstacle virtuel (D) présente une représentation, en particulier réaliste, d'un autre usager de la route, en particulier d'un autre véhicule automobile, d'un cycliste ou d'un piéton.

5. Procédé selon l'une quelconque des revendications précédentes, dans lequel :
l'obstacle virtuel (D) à afficher peut être préréglé, en particulier sélectionné parmi une forme géométrique abstraite et/ou une représentation, en particulier réaliste, d'un autre usager de la route.

6. Procédé selon l'une quelconque des revendications précédentes, dans lequel :
la détection de la réaction présente une détection d'un temps de réaction, d'une intervention de conduite, d'un pouls de l'occupant et/ou d'un mouvement des yeux de l'occupant.

7. Procédé selon l'une quelconque des revendications précédentes, dans lequel :
l'obstacle virtuel (D) et/ou l'erreur simulée (E) sont configurés de telle sorte qu'une reprise en main d'un contrôle du véhicule par l'occupant est nécessaire ; et/ou
lors de l'affichage de l'obstacle virtuel (D) et/ou de l'erreur simulée (E), un avertissement est adressé à l'occupant qu'une reprise en main d'un contrôle du véhicule par l'occupant est nécessaire.

8. Procédé selon l'une quelconque des revendications précédentes, dans lequel l'erreur simulée (E) présente :
une représentation d'une détection erronée par un système de capteurs de détection d'environnement (14) du véhicule automobile (10), en particulier d'un autre usager de la route, d'un obstacle, d'une délimitation de route, d'un tracé de route, d'une délimitation de voie, d'un tracé de voie, d'une délimitation de bande d'arrêt d'urgence, d'un tracé de bande d'arrêt d'urgence, d'un marquage de voie et/ou d'un tracé de marquage de voie ; et/ou
une non-détection d'un autre usager de la route (22) et/ou d'un marquage de voie par un système de capteurs d'environnement (14) du véhicule automobile (10) .

9. Procédé selon l'une quelconque des revendications précédentes, dans lequel l'erreur simulée (E) présente :
une représentation d'une détermination erronée d'un espace pouvant être parcouru par le véhicule automobile (10) ; et/ou
une représentation d'une détermination erronée d'une trajectoire planifiée (C) du véhicule automobile (10) ; et/ou
une représentation d'une trajectoire planifiée du véhicule automobile (10) sur une trajectoire de collision avec un autre usager de la route et/ou un obstacle.

10. Procédé selon l'une quelconque des revendications précédentes, dans lequel l'erreur simulée (E) présente :
une représentation d'une détermination erronée d'un lieu par un dispositif de localisation (16), en particulier assisté par satellite, du véhicule automobile (10), et/ou
une représentation d'une information erronée d'une information reçue au moyen d'une interface de communication (18) du véhicule automobile (10).

11. Procédé selon l'une quelconque des revendications précédentes, dans lequel :
l'affichage de l'obstacle virtuel (D) pour le véhicule automobile (10) et/ou de l'erreur simulée (E) est effectué de manière aléatoire dans le mode de fonctionnement partiellement autonome ou autonome ; ou
l'affichage de l'obstacle virtuel (D) pour le véhicule automobile (10) et/ou de l'erreur simulée (E) est effectué dans le mode de fonctionnement partiellement autonome ou autonome lorsque survient une condition prédéterminée, en particulier en cas de déplacement nocturne, lorsque la fatigue de l'occupant est identifiée, après un trajet ou une durée de déplacement prédéterminé(e) dans le mode de fonctionnement partiellement autonome ou autonome.

12. Procédé selon l'une quelconque des revendications précédentes, dans lequel :
l'affichage de l'obstacle virtuel (D) pour le véhicule automobile (10) et/ou de l'erreur simulée (E) n'est effectué dans le mode de fonctionnement partiellement autonome ou autonome que si un système de capteurs de détection d'environnement (14) du véhicule automobile (10) détecte qu'un environnement réel du véhicule automobile (10) est exempt d'autres usagers de la route et/ou d'obstacles.

13. Procédé selon l'une quelconque des revendications précédentes, dans lequel :
une intervention de conduite de la part de l'occupant en réaction à l'obstacle virtuel (D) et/ou à l'erreur simulée (E) peut être outrepassée par le mode de fonctionnement partiellement autonome ou autonome ; et/ou
une intervention de conduite de la part de l'occupant en réaction à l'obstacle virtuel (D) et/ou à l'erreur simulée (E) peut être surveillée et outrepassée par le mode de fonctionnement partiellement autonome ou autonome pour le fonctionnement sûr du véhicule automobile (10).

14. Véhicule automobile partiellement autonome ou autonome (10), en particulier véhicule utilitaire, présentant :
une unité de commande (12) qui est aménagée pour effectuer un procédé selon l'une quelconque des revendications précédentes.

15. Véhicule automobile (10) selon la revendication 14, présentant en outre :
un dispositif d'affichage à réalité augmentée (20), en particulier un dispositif de visualisation monté sur la tête et/ou un dispositif d'affichage tête haute qui peuvent être pilotés par l'unité de commande (12) pour afficher l'obstacle virtuel (D) et/ou l'erreur simulée (E), et/ou
un système de capteurs de détection d'environnement (14) pour détecter un environnement du véhicule automobile (10) ; et/ou
un dispositif de localisation (16), en particulier assisté par satellite ; et/ou
une interface de communication (18), en particulier une interface de communication de véhicule à véhicule et/ou une interface de communication de véhicule à infrastructure.
